# FASCICULE DE BREVET EUROPEEN

(11) **EP 0 810 133 B1**
(45) Date de publication et mention de la délivrance du brevet: **24.09.2003**
(21) Numéro de dépôt: 97401125.6
(22) Date de dépôt: 22.05.1997
(51) Int. Cl.: B60S 1/34, B60S 1/38, B60S 1/52

(54) **Essuie-glace de véhicule automobile comportant un raccordement automatique pour un dispositif de projection de liquide de lavage**
Scheibenwischer für Kraftfahrzeuge mit automatischer Befestigung für eine Sprühvorrichtung für Waschflüssigkeit
Windscreen wiper for vehicle with automatic fastening for spray device for washing liquid

(30) Priorité: 30.05.1996 FR 9606656
(43) Date de publication de la demande: 03.12.1997
(73) Titulaire: VALEO SYSTEMES D'ESSUYAGE, 78321 La Verrière (FR)
(72) Inventeur: Lefrancois, Laurent, 63500 Issoire (FR); Raynaud, Richard, 63320 Champeix (FR); Teindas, Jean-Louis, 63190 Ravel (FR)
(74) Mandataire: Gamonal, Didier

(56) Documents cités:
- EP-A- 0 330 458
- EP-A- 0 337 042
- EP-A- 0 518 760

## Description

L'invention concerne un essuie-glace de véhicule automobile comportant un dispositif de projection de liquide de lavage.

L'invention concerne plus particulièrement un essuie-glace de véhicule automobile comportant un balai d'essuie-glace articulé, autour d'un axe de rotation transversal, à l'extrémité longitudinale libre d'un bras d'essuie-glace, du type dans lequel l'essuie-glace porte un dispositif de projection de liquide de lavage qui est relié par une canalisation à un dispositif d'alimentation en liquide de lavage, et du type dans lequel la canalisation s'étend au moins en partie le long du bras d'essuie-glace, la canalisation et le dispositif de projection étant reliés par un raccord qui comporte une partie solidaire du balai.

Un tel dispositif est décrit par example dans le document EP-A-0 330 458.

Il est particulièrement avantageux de disposer le dispositif de projection sur l'essuie-glace et non pas sur un panneau de carrosserie proche de la vitre à essuyer.

En effet, la projection de liquide de lavage se fait ainsi au plus près de la vitre et on évite ainsi que le jet de liquide soit dévié par les filets d'air qui s'écoulent le long de la vitre lorsque le véhicule roule, déviation qui est plus ou moins importante en fonction de la vitesse du véhicule.

Par ailleurs, le dispositif de projection étant fixé sur l'essuie-glace, il est amené à balayer une grande partie du pare-brise lorsque l'essuie-glace balaye la vitre de sorte que la répartition du liquide de lavage peut être la plus uniforme possible.

Toutefois, il se pose le problème de l'alimentation en liquide de lavage d'un tel dispositif. En effet, le dispositif est généralement alimenté grâce à un dispositif d'alimentation qui est agencé à l'intérieur du véhicule et qui envoie du liquide de lavage sous pression au travers d'une canalisation souple qui est fixée notamment le long du bras d'essuie-glace à l'extrémité duquel est articulé le balai.

Lorsque le dispositif de projection est fixé sur le balai, il est donc nécessaire de prévoir une boucle de canalisation souple libre au niveau de l'articulation entre le balai et le bras afin de ne pas gêner leur mouvement relatif.

Une telle solution, outre qu'elle nécessite l'emploi d'une canalisation souple, est généralement peu favorable à une bonne intégration esthétique du dispositif de projection sur l'essuie-glace.

Un autre inconvénient majeur de ce type de dispositif apparaît au cours du montage du balai sur le bras. En effet, il est alors nécessaire d'assurer le raccordement des différents éléments agencés respectivement sur le bras et sur le balai, ce qui se révèle difficilement automatisable.

Par ailleurs, lorsque l'utilisateur souhaite changer le balai d'essuie-gtàce quand il est usé, il doit procéder au débranchement et au rebranchement du dispositif d'alimentation, ce qui est parfois une opération délicate du fait que certains éléments peuvent avoir été rendus cassants à cause du vieillissement des matériaux.

Aussi, afin d'apporter une solution à ces problèmes, l'invention propose un essuie-glace du type décrit précédemment,
caractérisé en ce que la canalisation et le dispositif de projection sont reliés par un raccord qui comporte en outre une partie solidaire du balai, et en ce que les deux parties du raccord sont raccordées automatiquement par pivotement du balai autour de son axe de rotation par rapport au bras.

Selon des modes de réalisation de l'invention :
- l'une des parties comporte un embout qui est reçu librement dans une cavité débouchante correspondante de l'autre partie, et l'embout se déplace librement dans la cavité lorsque le balai tourne autour de son axe de rotation par rapport au bras ;
- l'embout est tubulaire et s'étend sensiblement selon une direction en arc de cercle centrée sur l'axe de rotation du balai par rapport au bras, et il est reçu librement dans la cavité de forme correspondante;
- la partie du raccord qui est solidaire du balai d'essuie-glace est réalisée venue de matière avec le dispositif de projection pour lequel elle forme une entrée d'alimentation en liquide de lavage;
- le dispositif de projection est réalisé sous la forme d'un déflecteur aérodynamique qui s'étend le long du balai, et la cavité du raccord est formée dans un bord supérieur du déflecteur et est reliée à au moins un orifice d'aspersion tourné en direction d'une vitre à essuyer ;
- la partie du raccord qui est solidaire dû bras comporte un corps en forme d'agrafe fixé sur le bras ;
- la partie du raccord qui est solidaire du bras est réalisée venue de matière avec le bras ;
- la partie du raccord qui est solidaire du bras comporte un manchon tubulaire relié à l'embout tubulaire et sur lequel est emmanchée la canalisation ; et
- le manchon tubulaire s'étend longitudinalement le long d'une face inférieure du bras.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective d'un essuie-glace muni d'un dispositif de projection conforme aux enseignements de l'invention ; et
- la figure 2 est une vue agrandie illustrant plus particulièrement le raccord selon l'invention.

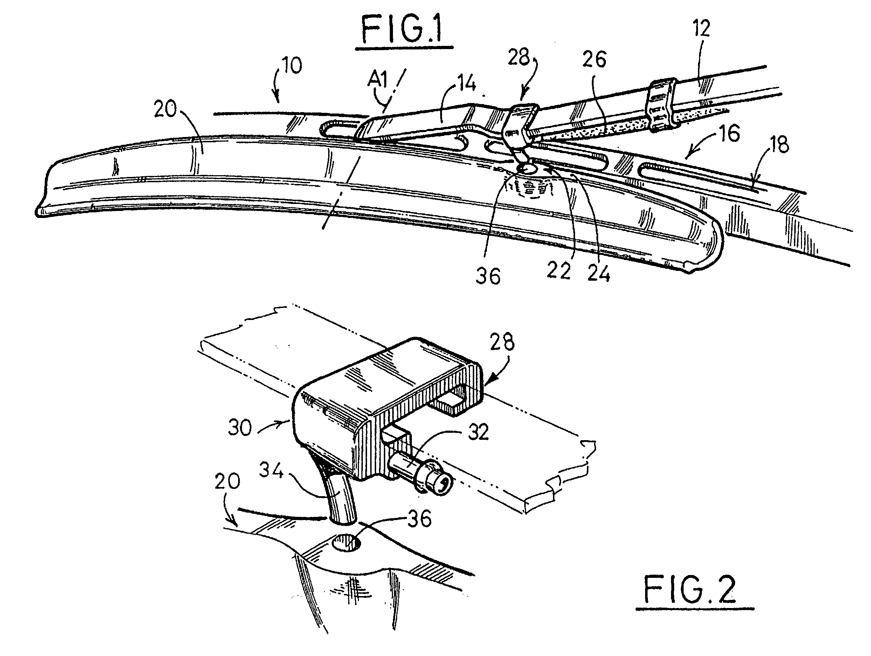

On a représenté sur la figure 1 un essuie-glace 10 de véhicule automobile qui comporte essentiellement un bras d'essuie-glace 12, à une extrémité libre 14 duquel est articulé un balai d'essuie-glace 16, autour d'un axe transversal A1.

Le balai d'essuie-glace 16, dont on n'a ici représenté qu'un étrier principal 18, porte, le long d'un de ses côtés, un déflecteur aérodynamique 20 qui permet de dévier le flux d'air, qui arrive contre le balai 18 du fait de la vitesse du véhicule, notamment dans le but de lutter contre la tendance au décollement du balai 16 par rapport à une vitre à essuyer (non représentée).

Le déflecteur 20 permet aussi d'améliorer l'essuyage en évitant que les filets d'air ne viennent perturber le travail d'une raclette d'essuyage (non représentée) portée par le balai 16.

Dans l'exemple de réalisation qui est représenté sur les figures, le déflecteur 20 forme également une rampe d'arrosage qui est destinée à projeter du liquide de lavage au travers d'orifices d'aspersion (non représentés) qui sont répartis de manière régulière sur sa longueur et qui débouchent en regard de la vitre. Le déflecteur 20 comporte donc une entrée d'alimentation 22 qui débouche dans un bord supérieur 24 du déflecteur 20 et il est destiné à être alimenté par une canalisation 26 reliée à un dispositif d'alimentation en liquide de lavage sous pression (non représenté) agencé par exemple à l'intérieur du véhicule.

Bien entendu, le dispositif de projection de lavage peut prendre d'autres formes, et, notamment, celles d'une rampe d'arrosage ou d'un simple gicleur.

La canalisation 26 s'étend le long du bras 12 sur lequel elle est fixée, par exemple au moyen de colliers, sensiblement jusqu'à l'extrémité libre 14 de celui-ci.

Conformément aux enseignements de l'invention, il est prévu un raccord 28 qui permet de relier la canalisation 26 à l'entrée d'alimentation 22.

Comme on peut le voir plus particulièrement sur la figure 2, le raccord 28 comporte un corps principal 30 en forme d'agrafe qui est fixé sur le bras 12 qui, en l'occurrence, est réalisé sous la forme d'une tige métallique. La fixation du corps 30 peut être assurée par tout moyen approprié, et notamment par emboîtement élastique ou par collage.

Le corps 30 est au moins partiellement creux de manière à ce que du liquide puisse entrer dans le corps 30 par l'intermédiaire d'un manchon tubulaire 32 et puisse en ressortir par un embout tubulaire 34.

Le manchon tubulaire 32 s'étend longitudinalement selon la direction du bras 12, à l'opposé de l'extrémité libre 14 de celui-ci, et la canalisation 26 est destinée à être emmanchée de manière étanche sur le manchon 32.

De préférence, le manchon 32 s'étend le long d'une face du bras 12 peu visible lorsque l'essuie-glace est installé sur le véhicule.

L'embout 34 s'étend lui en direction du déflecteur 20 selon une forme en arc de cercle centré sur l'axe A1 d'articulation du balai 16 sur le bras 12.

En effet, l'embout 34 est destiné à être reçu à l'intérieur d'une cavité 36 formant l'entrée d'alimentation 22 du dispositif de projection intégré au déflecteur 20. Cette cavité 36 est donc de forme correspondante à celle de l'embout 34, c'est-à-dire qu'elle est incurvée en arc de cercle centré sur l'axe A1 et qu'elle est de section semblable à celle de l'embout 34, en l'occurrence circulaire.

Ainsi, lorsque le balai 16 et son déflecteur 20 sont montés articulés à l'extrémité du bras 12, l'embout 34 est susceptible d'être reçu librement à l'intérieur de la cavité 36, par simple pivotement du balai 16 autour de son axe d'articulation A1.

En prévoyant un jeu suffisamment réduit entre l'embout 34 et la cavité 36, il n'est pas nécessaire de prévoir de moyens d'étanchéité supplémentaires car la pression du liquide de lavage à ce niveau est généralement fortement diminuée du fait des pertes de charge dans la canalisation 26.

Le raccord 28 selon l'invention permet de garantir l'alimentation du dispositif de projection de liquide de lavage tant qu'au moins un tronçon de l'embout 34 est reçu à l'intérieur de la cavité .36. Il est donc nécessaire de prévoir un embout 34 dont la dimension soit suffisante par rapport aux variations de l'inclinaison relative entre le balai 16 et le bras 12 lorsque l'essuie-glace se déplace dans son mouvement de balayage de la vitre. Toutefois, afin de limiter la longueur de l'embout 34, on a intérêt à disposer le raccord 28 au plus près de l'extrémité libre 14 du bras 12.

Dans l'exemple de réalisation qui est représenté sur les figures, une partie du raccord 28, c'est-à-dire la cavité 36, est donc réalisée venue de matière avec le déflecteur 20 qui forme le dispositif de projection fixé sur le balai 16. Au contraire, on peut prévoir que le dispositif de projection et l'entrée d'alimentation 22 soient réalisés sous la forme de composants séparés, reliés entre eux par un tuyau.

La partie du raccord 28 qui est solidaire du bras d'essuie-glace est ici réalisée sous la forme d'une pièce rapportée sur le bras 12. Au contraire, et notamment dans le cas où le bras 12 est réalisé par moulage en matière plastique, on peut prévoir de réaliser l'embout 34 et le corps principal 30 venus de matière avec le bras 12. Avantageusement, dans un tel cas, on peut prévoir de réaliser l'ensemble de la canalisation 26 et de la partie du raccord 28 qui est solidaire du bras 12 directement venu de matière avec le bras 12.

Dans l'exemple de réalisation qui vient d'être décrit, l'embout 34 est porté par la partie 30 du raccord 28 qui est solidaire du bras 12 mais il peut, par simple inversion mécanique, être porté par la partie 36 du raccord 28 solidaire du balai 16.

La conception du raccord selon l'invention permet donc d'apporter une solution simple, fiable et peu coûteuse au problème de l'intégration esthétique du dispositif de projection. Ce raccord est aussi particulièrement adapté à un montage automatisé du dispositif de projection de lavage puisque l'opération de raccordement s'effectue automatiquement par simple pivotement du balai 16 lorsque celui-ci est monté à rotation à l'extrémité libre 14 du bras 12.

## Revendications

1. Essuie-glace de véhicule automobile comportant un balai d'essuie-glace (12) articulé, autour d'un axe de rotation transversal (A1), à l'extrémité longitudinale libre (14) d'un bras d'essuie-glace (12), du type dans lequel l'essuie-glace (10) porte un dispositif de projection de liquide de lavage (20) qui est relié par une canalisation (26) à un dispositif d'alimentation en liquide de lavage, et du type dans lequel la canalisation (26) s'étend au moins en partie le long du bras d'essuie-glace (12), la canalisation (26) et le dispositif de projection (20) étant reliés par un raccord (28) qui comporte une partie (30) solidaire du bras (12),
**caractérisé en ce que** le raccord comporte en outre une partie (36) solidaire du balai (16), et **en ce que** les deux parties (30, 36) du raccord (28) sont raccordées automatiquement par pivotement du balai (16) autour de son axe de rotation (A1) par rapport au bras (12).

2. Essuie-glace selon la revendication 1, **caractérisé en ce que** l'une des parties comporte un embout (34) qui est reçu librement dans une cavité débouchante (36) correspondante de l'autre partie, et **en ce que** l'embout (34) se déplace librement dans la cavité (36) lorsque le balai (16) tourne autour de son axe de rotation (A1) par rapport au bras (12).

3. Essuie-glace selon la revendication 2, **caractérisé en ce que** l'embout (34) est tubulaire et s'étend sensiblement selon une direction en arc de cercle centrée sur l'axe de rotation (A1) du balai (16) par rapport au bras (12), et **en ce qu'**il est reçu librement dans la cavité (36) de forme correspondante.

4. Essuie-glace selon la revendication 3, **caractérisé en ce que** la partie (36) du raccord (28) qui est solidaire du balai d'essuie-glace (16) est réalisée venue de matière avec le dispositif de projection (20) pour lequel elle forme une entrée d'alimentation (22) en liquide de lavage.

5. Essuie-glace selon l'une quelconque des revendications précédentes, **caractérisé en ce que** le dispositif de projection est réalisé sous la forme d'un déflecteur aérodynamique (20) qui s'étend le long du balai (12), et **en ce que** la cavité (36) du raccord (28) est formée dans un bord supérieur (24) du déflecteur et est reliée à au moins un orifice d'aspersion (24) tourné en direction d'une vitre à essuyer.

6. Essuie-glace selon l'une quelconque des revendications précédentes, **caractérisé en ce que** la partie du raccord (28) qui est solidaire du bras (12) comporte un corps (30) en forme d'agrafe fixé sur le bras (12).

7. Essuie-glace selon l'une quelconque des revendications 1 à 5, **caractérisé en ce que** la partie du raccord (28) qui est solidaire du bras (12) est réalisée venue de matière avec le bras (12).

8. Essuie-glace selon l'une des revendications 6 ou 7, **caractérisé en ce que** la partie (30) du raccord (28) qui est solidaire du bras (12) comporte un manchon tubulaire (32) relié à l'embout tubulaire (34) et sur lequel est emmanchée la canalisation (26).

9. Essuie-glace selon la revendication 8, **caractérisé en ce que** le manchon tubulaire (32) s'étend longitudinalement le long d'une face inférieure du bras (12).

## Patentansprüche

1. Scheibenwischer für Kraftfahrzeuge mit einem gelenkig um eine Querrotationsachse (A1) gelagerten Scheibenwischerblatt (16) am freien Längsende (14) eines Scheibenwischerarms (12), wobei der Scheibenwischer (10) eine Spritzvorrichtung (20) einer Waschflüssigkeit trägt, die über eine Leitung (26) mit einer Waschflüssigkeits-Versorgungsvorrichtung verbunden ist, und wobei sich die Leitung (26) zumindest teilweise entlang dem Scheibenwischerarm (12) erstreckt, wobei die Leitung (26) und die Spritzvorrichtung (20) über einen Stutzen (28) verbunden sind, der ein am Wischerarm (12) befestigtes Teil aufweist, **dadurch gekennzeichnet, dass** der Stutzen ferner ein am Wischerblatt (16) befestigtes Teil (36) umfasst, und dass die beiden Teile (30, 36) des Stutzens automatisch durch Verschwenken des Wischerblatts (16) um seine Rotationsachse (A1) in Bezug auf den Wischerarm (12) angeschlossen werden.

2. Scheibenwischer nach Anspruch 1, **dadurch gekennzeichnet, dass** eines der Teile einen Ansatz (34) aufweist, der frei in einem entsprechenden Hohlraum (36) in dem anderen Teil aufgenommen wird, und dass sich der Ansatz (34) frei in dem Hohlraum (36) bewegt, wenn sich das Wischerblatt (16) um seine Rotationsachse (A1) in Bezug auf den Wischerarm (12) dreht.

3. Scheibenwischer nach Anspruch 2, **dadurch gekennzeichnet, dass** der Ansatz (34) rohrförmig ist und sich etwa nach einer kreisbogenförmigen, auf die Rotationsachse (A1) des Wischerblatts (16) in Bezug auf den Wischerarm (12) zentrierten Richtung erstreckt, und dass er frei in dem Hohlraum (36) von entsprechender Form aufgenommen wird.

4. Scheibenwischer nach Anspruch 3, **dadurch gekennzeichnet, dass** das am Wischerblatt (16) befestigte Teil (36) des Stutzens (28) aus dem gleichen Material wie die Spritzvorrichtung (20) besteht, für die es einen Versorgungseingang (22) mit Waschflüssigkeit bildet.

5. Scheibenwischer nach einem der. vorangehenden Ansprüche, **dadurch gekennzeichnet, dass** die Spritzvorrichtung in Form eines aerodynamischen Spoilers (20) realisiert ist, der sich entlang dem Wischerblatt (12) erstreckt, und dass der Hohlraum (36) des Stutzens (28) in einer oberen Kante (24) des Spoilers ausgebildet und mit zumindest einer in Richtung einer zu wischenden Scheibe gerichteten Berieselungsöffnung (24) verbunden ist.

6. Scheibenwischer nach einem er vorangehenden Ansprüche, **dadurch gekennzeichnet, dass** das Teil des Stutzens (28), das am Wischerarm (12) befestigt ist, einen Körper (30) in Form einer auf dem Wischerarm (12) befestigten Klammer umfasst.

7. Scheibenwischer nach einem der Ansprüche 1 bis 5, **dadurch gekennzeichnet, dass** das Teil des Stutzens (28), das am Wischerarm (12) befestigt ist, aus dem gleichen Material besteht wie der Wischerarm (12).

8. Scheibenwischer nach einem der Ansprüche 6 oder 7, **dadurch gekennzeichnet, dass** das Teil (30) des Stutzens (28), das am Wischerarm (12) befestigt ist, eine rohrförmige, mit dem rohrförmigen Ansatz (34) verbundene Muffe (32) umfasst, in die die Leitung (26) eingesteckt ist.

9. Scheibenwischer nach Anspruch 8, **dadurch gekennzeichnet, dass** sich die rohrförmige Muffe (32) in Längsrichtung entlang einer Unterseite des Wischerarms (12) erstreckt.

## Claims

1. A motor vehicle wiper comprising a wiper blade (12) articulated, about a transverse rotation axis (A1), at the free longitudinal end (14) of a wiper arm (12), of the type in which the wiper (10) carries a device for spraying washing liquid (20) which is connected by a pipe (26) to a washing liquid supply device, and of the type in which the pipe (26) extends at least partly along the wiper arm (12), the pipe (26) and the spray device (20) being connected by a coupling (28) which comprises a part (30) fixed to the arm (12),
**characterised in that** the coupling also comprises a part (36) fixed to the blade (16), and **in that** the two parts (30, 36) of the coupling (28) are automatically connected by pivoting the blade (16) about its axis of rotation (A1) with respect to the arm (12).

2. A wiper according to Claim 1, **characterised in that** one of the parts comprises a connecting piece (34) which is received freely in a corresponding opening-out cavity (36) in the other part, and **in that** the connecting piece (34) moves freely in the cavity (36) when the blade (16) turns about its axis of rotation (A1) with respect to the arm (12).

3. A wiper according to Claim 2, **characterised in that** the connecting piece (34) is tubular and extends substantially in a direction in an arc of a circle centred on the axis of rotation (A1) of the blade (16) with respect to the arm (12) and **in that** it is received freely in the cavity (36) with a corresponding shape.

4. A wiper according to Claim 3, **characterised in that** the part (36) of the coupling (28) which is fixed to the wiper blade (16) is produced intone piece with the spray device (20), for which it forms a washing liquid supply inlet (22).

5. A wiper according to any one of the preceding claims, **characterised in that** the spray device is produced in the form of an aerodynamic deflector (20) which extends along the blade (12), and **in that** the cavity (36) of the coupling (28) is formed in a top edge (24) of the deflector and is connected to at least one spray orifice (24) turned in the direction of a window to be wiped.

6. A wiper according to any one of the preceding claims, **characterised in that** the part of the coupling (28) which is fixed to the arm (12) comprises a body (30) in the form of a cramp fixed to the arm (12).

7. A wiper according to any one of Claims 1 to 5, **characterised in that** the part of the coupling (28) which is fixed to the arm (12) is produced in one piece with the arm (12).

8. A wiper according to one of Claims 6 or 7, **characterised in that** the part (30) of the coupling (28) which is fixed to the arm (12) comprises a tubular sleeve (32) connected to the tubular connecting piece (34) and on which the pipe (26) is fitted.

9. A wiper according to Claim 8, **characterised in that** the tubular sleeve (32) extends longitudinally along a bottom face of the arm (12).
